# FASCICULE DE BREVET EUROPEEN

(11) **EP 2 895 344 B1**
(45) Date de publication et mention de la délivrance du brevet: **22.01.2020**
(21) Numéro de dépôt: 13774718.4
(22) Date de dépôt: 04.09.2013
(51) Int. Cl.: B60J 10/70

(54) **SYSTÈME DE JOINT POUR VITRAGE DE VÉHICULE, VITRAGE ÉQUIPÉ DU SYSTÈME ET PROCÉDÉ DE MONTAGE DU VITRAGE**
DICHTUNGSSYSTEM FÜR EINE FAHRZEUGVERGLASUNG, VERGLASUNG MIT DEM SYSTEM UND VERFAHREN ZUR MONTAGE DER VERGLASUNG
SEAL SYSTEM FOR A VEHICLE GLAZING, GLAZING PROVIDED WITH THE SYSTEM AND METHOD FOR MOUNTING THE GLAZING

(30) Priorité: 14.09.2012 FR 1258663
(43) Date de publication de la demande: 22.07.2015
(73) Titulaire: Saint-Gobain Glass France, 92400 Courbevoie (FR)
(72) Inventeur: SILVESTRINI, Laurent, F-60400 Bussy (FR)
(74) Mandataire: Saint-Gobain Recherche
(86) Numéro de dépôt international: PCT/FR2013/052034
(87) Numéro de publication internationale: WO 2014/041279

(56) Documents cités:
- EP-A1- 2 253 556
- EP-A1- 2 505 491
- DE-U- 1 690 860
- FR-A1- 2 205 622
- FR-A1- 2 952 900

## Description

La présente invention porte sur un système de joint pour vitrage de véhicule.

Ce vitrage est un vitrage fixe de véhicule, en particulier pour automobile, notamment un vitrage de toit, un pare-brise ou une lunette arrière et est en particulier un vitrage bombé.

La présente invention porte plus particulièrement sur un système de joint pour vitrage de véhicule comportant :
- un cordon profilé comportant une partie creuse allongée et ouverte vers le haut, ledit cordon profilé présentant en coupe transversale une partie de col gauche et une partie de col droit,
- une âme comportant une quille disposée à l'intérieur de ladite partie creuse et une tige disposée à l'extérieur de ladite partie creuse et
- un moyen de préhension pour permettre de retirer ladite quille de ladite partie creuse.

L'âme sert à protéger la partie creuse afin qu'elle conserve sa forme ; il s'agit donc d'un élément provisoire et allongé qui est retiré après que le vitrage soit installé dans la baie qu'il doit fermer d'un véhicule, en cours de fabrication du véhicule et avant que le véhicule ne soit complètement terminé. Cette âme n'est donc pas présente sur le véhicule fini.

La partie creuse est généralement prévu tout le long d'un bord du vitrage, comme par exemple le bord inférieur d'un pare-brise.

La partie creuse est ensuite utilisée pour cliper un élément en plastique, parfois appelé « boîte à eau » ou « grille d'auvent », présentant un bossage destiné à rentrer dans la partie creuse. Il est important que la quille puisse être retirée de la partie creuse sans l'endommager afin que le clipage ultérieur de cet élément en plastique s'opère correctement.

Il est proposé dans la demande de brevet européen N° EP 2 253 556 de disposer au moins un moyen de préhension constitué d'une languette présentant une partie qui fait le tour de la quille à l'intérieur de la partie creuse et une partie qui dépasse en dehors de la partie creuse du cordon profilé, au-dessus de la quille.

Cette languette est satisfaisante dans le sens où elle permet effectivement d'éviter le recours à un instrument pour retirer l'âme et évite ainsi tout risque d'endommagement de la partie creuse du cordon profilé lors du retrait de l'âme.

Toutefois, cette solution n'est pas complètement satisfaisante car elle implique l'utilisation d'un adhésif en face interne de la languette et si les deux parties de la languette qui sont collées l'une sur l'autre au-dessus de l'âme ne sont pas bien collées en vis-à-vis l'une de l'autre, alors la surface collante libre peut se coller sur le cordon profilé ou sur le vitrage et peut laisser des traces.

En outre, comme la force de traction qui peut être exercée sur chaque languette est relativement faible, pour pouvoir retirer correctement l'âme tout le long de la partie creuse sans provoquer la rupture de la languette, il faut prévoir un nombre important de languettes tout le long de l'âme et l'opération de traction sur chaque languette prend du temps. Comme cette opération est réalisée sur la chaîne générale de montage du véhicule, il serait préférable que l'opération de retrait de l'âme puisse être opérée plus rapidement.

La présente invention entend remédier aux inconvénients de l'art antérieur en proposant un système de joint dont le moyen de préhension qui permet de retirer l'âme, à la fois est plus facile à positionner lorsque l'âme est introduite dans la partie creuse et à la fois facilite encore le retrait de l'âme et en particulier permet un retrait de l'âme encore plus rapide.

L'invention a ainsi pour objet, dans son acception la plus large, un système de joint pour vitrage de véhicule, en particulier pare-brise, ledit système comportant :
- un cordon profilé comportant une partie creuse allongée et ouverte vers le haut, ledit cordon profilé présentant en coupe transversale une partie de col gauche et une partie de col droit,
- une âme comportant une quille disposée à l'intérieur de ladite partie creuse et
- un moyen de préhension pour permettre de retirer ladite quille de ladite partie creuse.

Ce système est remarquable en ce que, vu en coupe transversale, ledit moyen de préhension forme une boucle souple de telle sorte qu'en dehors de toute sollicitation elle présente une forme de tube cylindrique
et comporte d'une part une base située entre ladite
quille et ladite portion de partie creuse et d'autre part un anneau disposé au-dessus de ladite âme.

Ainsi, selon l'invention, une boucle est disposée afin que l'âme soit à l'intérieur de la boucle et que cette boucle puisse être saisie au-dessus de l'âme afin de pouvoir retirer l'âme de la partie creuse du cordon profilé. Le retrait de l'âme est ainsi plus facile qu'avec la languette de l'art antérieur car les forces de traction exercées pour le retrait se répartissent le long de la boucle.

Comme la traction sur la boucle en un endroit donné de l'âme n'est pas suffisante pour permettre de retirer toute l'âme, cette boucle peut être glissée le long de l'âme pour aider à retirer l'âme dans les endroits où elle est encore présente dans la partie creuse ou près des endroits où elle est encore présente dans la partie creuse. Le retrait de l'âme est ainsi plus rapide qu'avec la languette de l'art antérieur car il n'y a plus besoin de lâcher une languette pour en attrape une autre et tirer dessus : il suffit de conserver un effort de traction sur la boucle tout en la déplaçant le long de l'âme.

En particulier, il est préférable que ladite boucle présente au repos, sans l'âme à l'intérieur, un diamètre intérieur d compris entre 20 mm et 50 mm et de préférence compris entre 30 mm et 40 mm, afin de présenter la matière nécessaire et suffisante à la préhension au-dessus de l'âme.

Toutes les plages mentionnées ici sont indiquées en incluant les valeurs limites, à la décimale près.

De préférence, la boucle présente une largeur w comprise entre 3 mm et 30 mm et/ou la partie de l'anneau située au-dessus de l'élément vitré présente une hauteur h comprise entre 3 et 30 mm, afin de faciliter sa préhension et son déplacement le long de l'âme par un opérateur.

Dans une variante, ledit moyen de préhension est un fil qui est refermé sur lui-même, de préférence sans superposition de matière (d'un seul tenant) ; ledit fil présente en outre un diamètre compris de préférence entre 0,8 mm et 2 mm. Cette variante est très économique à fabriquer.

Dans une autre variante, ledit moyen de préhension est une bande qui est refermée sur elle-même, de préférence sans superposition de matière (d'un seul tenant), ladite bande présentant une longueur L comprise entre 3 mm et 10 mm. L'épaisseur de la bande peut être de 0,05 mm à 0,5 mm. Cette variante à bande assure une bonne résistance de la boucle aux forces de traction permettant l'extraction de l'âme.

De préférence, la boucle de l'anneau, avant le retrait de l'âme, s'étend de la partie de col gauche à la partie de col droit du cordon profilé.

Deux modes de mise en œuvre sont envisagés : ledit moyen de préhension peut être unique ou deux moyens de préhension sont prévus, de préférence chacun près de chaque extrémité longitudinale de ladite âme.

La présente invention porte également sur un procédé de montage d'un vitrage comportant un système de joint selon l'invention dans une baie de carrosserie, dans lequel ledit moyen de préhension en forme une boucle au moins est coulissé le long de l'âme lors du retrait de l'âme.

Lorsqu'un seul moyen de préhension est prévu, la boucle est coulissée tout le long de l'âme en tirant vers le haut pour retirer l'âme.

Lorsque deux moyens de préhension sont prévus, un près de chaque extrémité ou les deux vers le centre selon la longueur de l'âme, chaque boucle est coulissée sur environ la moitié de la longueur de l'âme, de l'extrémité vers le centre ou du centre vers l'extrémité, en tirant vers le haut pour retirer l'âme.

La présente invention porte également sur un vitrage de véhicule, en particulier un pare-brise, ledit vitrage comportant un élément vitré et un système de joint selon l'invention.

La présente invention porte en particulier sur un tel vitrage qui est collé préalablement dans une baie par au moins un cordon de colle, c'est-à-dire avant la mise en œuvre du procédé.

La présente invention permet non seulement de simplifier l'étape de retrait de l'âme tout le long de la partie creuse du cordon profilé, mais en outre permet d'opérer ce retrait plus rapidement.

De plus, la présente invention permet le retrait de l'âme pour un coût inférieur puisqu'il n'est plus nécessaire de prévoir beaucoup de moyens de préhension, car un suffit, voire deux suffisent et il n'est plus nécessaire d'utiliser les produits chimiques adhérant onéreux.

En outre, l'industrialisation de la solution est simple : il n'est pas nécessaire de calculer quel nombre de languettes fixes est nécessaire pour pouvoir retirer la totalité de l'âme du fait que la boucle est mobile le long de l'âme.

Comme il n'y a pas d'adhésif, il n'y a pas de risque de pollution ou de collage intempestif.

La présente invention sera mieux comprise à la lecture de la description détaillée ci-après d'exemples de réalisation non limitatifs et des figures ci-jointes :
- La figure 1 illustre une vue en coupe d'un vitrage de véhicule selon l'invention muni d'un cordon profilé ;
- La figure 2 illustre une vue en coupe du vitrage illustré en figure 1, pendant l'opération de retrait de l'âme ;
- La figure 3 illustre une vue éclatée du vitrage illustré en figure 1 ; et
- La figure 4 illustre une vue en perspective, de l'anneau selon l'invention.

Dans ces figures, les proportions entre les différents éléments sont respectées sur chaque figure mais les éléments en arrière plan ne sont en général pas représentés, afin de faciliter leur lecture.

La présente invention se rapporte à l'assemblage et l'intégration d'un vitrage dans une baie de carrosserie d'un véhicule.

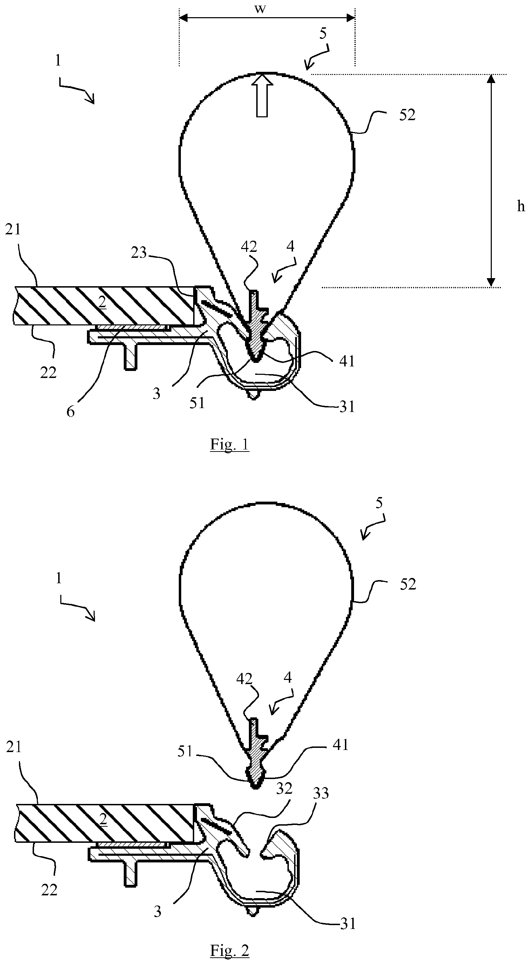

Le vitrage 1 selon l'invention qui est illustré en figure 1 est un pare-brise automobile, illustré en partie et positionné à plat pour simplifier. Il comporte un élément vitré 2 muni d'une portion d'un cordon profilé 3.

Le vitrage 1, est destiné à fermer une baie réalisant une séparation entre un espace intérieur du véhicule et un espace extérieur au véhicule. L'élément vitré 2 présente ainsi une face extérieure 21 destinée à être tournée vers l'espace extérieur, une face intérieure 22 destinée à être tournée vers l'espace intérieur, ainsi qu'un chant périphérique 23.

L'orientation est, tout le long du présent document, faite en référence à l'orientation de la figure 1.

L'élément vitré peut être monolithique, c'est-à-dire constitué d'une feuille de matière unique, ou être composite, c'est-à-dire constitué de plusieurs feuilles de matière entre lesquelles est insérée au moins une couche de matière adhérente dans le cas des vitrages feuilletés. La (ou les) feuille(s) de matière peut (ou peuvent) être minérale(s), notamment en verre, ou organique(s), notamment en matière plastique.

Dans le cas d'un vitrage pour véhicule, le vitrage présente généralement au moins partiellement à sa périphérie une bande d'ornementation, non illustrée ici. Cette bande d'ornementation résulte en général d'un dépôt d'émail, réalisé sur la face intérieure du vitrage ou sur une face intercalaire du vitrage pour les vitrages composites, mais elle peut également résulter d'une coloration partielle et/ou périphérique d'une feuille de matière utilisée, notamment d'une feuille en matière organique.

Lorsque l'élément vitré est en matière organique, il a été fabriqué préalablement à la mise en œuvre de l'invention par moulage de la matière constitutive de l'élément vitré dans un dispositif de moulage comportant un moule comportant au moins une partie fixe de moule et une partie mobile de moule qui est mobile par rapport à la partie fixe de moule, lesdites parties de moule coopérant à l'état fermé du moule, pendant l'étape de moulage, pour former une cavité de moulage présentant en coupe la forme en coupe de l'élément vitré. Souvent, l'élément vitré en matière organique n'est pas plat mais bombé.

Lorsque l'élément vitré est en matière minérale, il a été fabriqué préalablement à la mise en œuvre de l'invention par fusion de matière minérale en une feuille plate, puis par découpe de cette feuille et éventuellement bombage de cette feuille.

Sur la figure 1, l'élément vitré 2 est un vitrage feuilleté.

Le système de joint selon l'invention comporte :
- un cordon profilé 3 comportant une partie creuse 31 allongée et ouverte vers le haut, ledit cordon profilé 3 présentant en coupe transversale une partie de col gauche 32 et une partie de col droit 33,
- une âme 4 comportant une quille 41 disposée à l'intérieur de ladite partie creuse 31 et une tige 42 disposée à l'extérieur de la partie creuse 31, entre la partie de col gauche 32 et la partie de col droit 33 et
- un moyen de préhension 5 pour permettre de retirer la quille 41 de la partie creuse 31.

Comme visible sur cette figure 1, le cordon profilé 3 comporte une partie intérieure, destinée à être positionnée sous la face intérieure 22 de l'élément vitré, ainsi qu'une partie latérale, destiné à être positionné à côté du chant 23 de l'élément vitré et une partie extérieure comportant une lèvre située dans la continuité de la face extérieure 21 de l'élément vitré (« flush » en anglais).

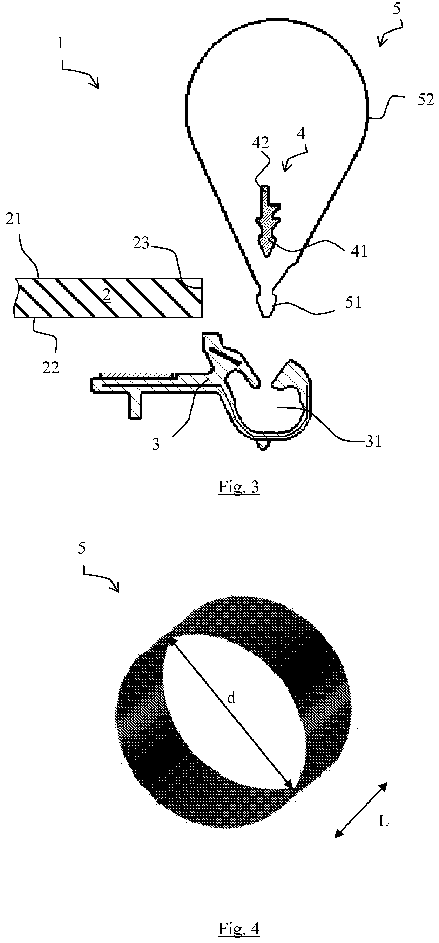

Comme visible en figure 3, sur la vue éclatée, la partie creuse 31 du cordon profilé est ouverte vers le haut et cette ouverture présente en coupe transversale une partie de col gauche 32 et une partie de col droit 33.

Le cordon profilé 3 est ici renforcé par un insert métallique.

L'accrochage mécanique entre la quille 41 de l'âme et la partie creuse 31 du cordon profilé est du type tenon-mortaise, avec, ici, la forme en coupe de la quille 41 qui est complémentaire de la partie creuse 31 : cette complémentarité est telle que, en coupe transversale, les dimensions extérieures de la quille 41 sont inférieures aux dimensions intérieures de la partie creuse 31, qui forme ainsi comme une rainure dans laquelle la quille est clipée.

Un adhésif 6 est en outre prévu pour permettre de coller le cordon profilé contre la surface interne 22 de l'élément vitré.

L'âme 4 est prévu tout le long de la partie creuse 31 afin de protéger la conformation de cette partie creuse jusqu'à ce que cette partie creuse soit utilisée pour cliper un élément de carrosserie généralement en plastique (appelé notamment « grille d'auvent »)

Selon l'invention, vu en coupe transversale, le moyen de préhension 5 forme une boucle et comporte d'une part une base 51 située entre la quille 41 et la portion de partie creuse 31 et d'autre part un anneau 52 disposé au-dessus de l'âme 4.

Vu en coupe transversale, la boucle fait donc tout le tour de l'âme ; elle entoure complètement l'âme.

L'anneau permet de passer un doigt, voire un outil, pour opérer une force de traction vers le haut, comme celle illustrée par la double flèche en figure 1, afin de retirer l'âme 4 de la partie creuse 31 comme visible en figure 2.

Pour cela, la boucle peut présenter une largeur w comprise entre 3 mm et 30 mm et/ou la partie de l'anneau 52 située au-dessus de l'élément vitré présente une hauteur h comprise entre 3 et 30 mm.

Comme visible en figure 1, la base 51 est située contre la surface de la quille 41 lorsque la traction est opérée vers le haut, mais n'est pas nécessairement située contre la surface de la quille 41 avant que cette traction ne soit opérée puisqu'il n'y a pas d'adhérence entre le moyen de préhension et l'âme.

La figure 2 montre l'âme retirée de la partie creuse du cordon profilé, juste au-dessus du col de cette partie creuse.

En général, le retrait de l'âme est opéré après le collage du vitrage dans la baie de carrosserie qu'il doit fermer ; toutefois, cette baie ainsi que le cordon de colle nécessaire pour le collage ne sont pas illustrés en figures 1 et 2.

La figure 3 montre simplement le détail des différents éléments du vitrage 1 des figures 1 et 2.

La figure 4 montre le moyen de préhension 5 qui est une bande qui est refermée sur elle-même ; cette bande est ici refermée sur elle-même sans superposition de matière ; cette bande présentant une longueur L comprise entre 3 mm et 10 mm, comme par exemple ici 5 mm.

L'anneau est en matière plastique. Il est par exemple en polypropylène ou en polyester.

Sur cette figure 4, la boucle est illustrée sans l'âme à l'intérieur, dans son état au repos. La boucle est souple de telle sorte qu'en dehors de toute sollicitation elle présente une forme de tube cylindrique. Elle présente un diamètre intérieur d compris entre 20 mm et 50 mm et de préférence compris entre 30 mm et 40 mm, comme par exemple ici de 35 mm. Son épaisseur peut être de 0,05 mm à 0,5 mm, comme par exemple ici de 0,08 mm.

Dans l'absolu la boucle peut être formée à façon afin que son profil dans son état au repos, sans contact avec l'âme, soit similaire à celui de la quille de l'âme et/ou de la partie creuse du cordon profilé ; toutefois, il est plus simple d'utiliser un anneau souple qui se déforme lorsque l'on tire dessus, sans se rompre.

La présente invention est décrite dans ce qui précède à titre d'exemple. Il est entendu que l'homme du métier est à même de réaliser différentes variantes de l'invention sans pour autant sortir du cadre du brevet tel que défini par les revendications.

## Revendications

1. Système de joint pour vitrage (1) de véhicule, en particulier pare-brise, ledit système comportant :
- un cordon profilé (3) comportant une partie creuse (31) allongée et ouverte vers le haut, ledit cordon profilé (3) présentant en coupe transversale une partie de col gauche (32) et une partie de col droit (33),
- une âme (4) comportant une quille (41) disposée à l'intérieur de ladite partie creuse (31), ladite âme étant un élément provisoire et allongé qui est retiré après que le vitrage soit installé dans la baie qu'il doit fermer d'un véhicule, en cours de fabrication du véhicule et avant que le véhicule ne soit complètement terminé, et
- un moyen de préhension (5) pour permettre de retirer ladite quille (41) de ladite partie creuse (31),
**caractérisé en ce que,** vu en coupe transversale, ledit moyen de préhension (5) forme une boucle souple de telle sorte qu'en dehors de toute sollicitation elle présente une forme de tube cylindrique, et comporte d'une part une base (51) située entre ladite quille (41) et ladite portion de partie creuse (31) et d'autre part un anneau (52) disposé au-dessus de ladite âme (4), afin que la quille (41) puisse être retirée de la partie creuse (31) sans l'endommager et que le clipage ultérieur d'un élément en plastique s'opère correctement.

2. Système selon la revendication 1, **caractérisé en ce que** ladite boucle sans l'âme à l'intérieur présente un diamètre intérieur d compris entre 20 mm et 50 mm et de préférence compris entre 30 mm et 40 mm.

3. Système selon la revendication 1 ou 2, **caractérisé en ce que** la boucle présente une largeur w comprise entre 3 mm et 30 mm et/ou la partie de l'anneau (52) située au-dessus de l'élément vitré présente une hauteur h comprise entre 3 et 30 mm.

4. Système selon l'une quelconque des revendications 1 à 3, **caractérisé en ce que** ledit moyen de préhension (5) est un fil qui est refermé sur lui-même, de préférence sans superposition de matière, ledit fil présentant un diamètre compris de préférence entre 0,8 mm et 2 mm.

5. Système selon l'une quelconque des revendications 1 à 3, **caractérisé en ce que** ledit moyen de préhension (5) est une bande qui est refermée sur elle-même, de préférence sans superposition de matière, ladite bande présentant une longueur L comprise entre 3 mm et 10 mm.

6. Système selon l'une quelconque des revendications 1 à 5, **caractérisé en ce que** la boucle de l'anneau (52) s'étend de la partie de col gauche (31) à la partie de col droit (32).

7. Système selon l'une quelconque des revendications 1 à 6, **caractérisé en ce que** ledit moyen de préhension (5) est unique ou deux moyens de préhension (5) sont prévus, de préférence chacun près de chaque extrémité longitudinale de ladite âme (4).

8. Vitrage (1) de véhicule, en particulier pare-brise, ledit vitrage (1) comportant un élément vitré (2) et un système de joint selon l'une quelconque des revendications 1 à 7.

9. Procédé de montage d'un vitrage (1) comportant un système de joint selon l'une quelconque des revendications 1 à 7 dans une baie de carrosserie, dans lequel ledit moyen de préhension (5) en forme une boucle est coulissé le long de l'âme (4) lors du retrait de l'âme.

## Patentansprüche

1. Dichtungssystem (1) für eine Fahrzeugverglasung, insbesondere eine Windschutzscheibe, wobei das System Folgendes umfasst:
- einen profilierten Wulst (3), der einen länglichen und nach oben offenen hohlen Teil (31) umfasst, wobei der profilierte Wulst (3) im Querschnitt einen linken Halsteil (32) und einen rechten Halsteil (33) aufweist,
- einen Kern (4), der einen Kiel (41) umfasst, der innerhalb des hohlen Teils (31) angeordnet ist, wobei der Kern ein vorläufiges und längliches Element ist, das entfernt wird, nachdem die Verglasung in der Öffnung eines Fahrzeugs, die er verschließen soll, installiert ist, und bevor das Fahrzeug vollständig fertiggestellt ist, und
- ein Greifmittel (5), um das Entfernen des Kiels (41) aus dem hohlen Teil (31) zu erlauben,
**dadurch gekennzeichnet, dass** das Greifmittel (5) im Querschnitt gesehen eine flexible Schleife derart bildet, dass es ohne jegliche Beanspruchung eine zylindrische Rohrform aufweist und einerseits eine Basis (51) umfasst, die zwischen dem Kiel (41) und dem Abschnitt des hohlen Teils (31), und andererseits einem Ring (52) liegt, der über dem genannten Kern (4) angeordnet ist, so dass der Kiel (41) aus dem hohlen Teil (31) herausgenommen werden kann, ohne ihn zu beschädigen, und das anschließende Clipsen eines Kunststoffelements ordnungsgemäß durchgeführt werden kann.

2. System nach Anspruch 1, **dadurch gekennzeichnet, dass** die Schleife ohne den Kern in dem Inneren einen Innendurchmesser d zwischen 20 mm und 50 mm, und vorzugsweise zwischen 30 mm und 40 mm aufweist.

3. System nach Anspruch 1 oder 2, **dadurch gekennzeichnet, dass** die Schleife eine Breite w zwischen 3 mm und 30 mm aufweist und/oder der der Teil des Rings (52), der über dem verglasten Element liegt, eine Höhe h zwischen 3 und 30 mm aufweist.

4. System nach einem der Ansprüche 1 bis 3, **dadurch gekennzeichnet, dass** das Greifmittel (5) ein in sich geschlossener Draht, vorzugsweise ohne Materialüberlagerung ist, wobei der Draht einen Durchmesser aufweist, der vorzugsweise zwischen 0,8 mm und 2 mm liegt.

5. System nach einem der Ansprüche 1 bis 3, **dadurch gekennzeichnet, dass** das Greifmittel (5) ein in sich geschlossenes Band, vorzugsweise ohne Materialüberlagerung ist, wobei das Band eine Länge L zwischen 3 mm und 10 mm aufweist.

6. System nach einem der Ansprüche 1 bis 5, **dadurch gekennzeichnet, dass** sich die Schleife des Rings (52) von dem linken Halsteil (31) zu dem rechten Halsteil (32) erstreckt.

7. System nach einem der Ansprüche 1 bis 6, **dadurch gekennzeichnet, dass** das Greifmittel (5) das einzige ist, oder dass zwei Greifmittel (5), vorzugsweise jeweils nahe jedem Längsende des genannten Kerns (4), vorgesehen sind.

8. Fahrzeugverglasung (1), insbesondere Windschutzscheibe, wobei die Verglasung (1) ein Verglasungselement (2) und ein Dichtungssystem nach einem der Ansprüche 1 bis 7 umfasst.

9. Verfahren zur Montage einer Verglasung (1), die ein Dichtungssystem nach einem der Ansprüche 1 bis 7 umfasst, in einer Karosserieöffnung, wobei das Greifmittel (5) in Form einer Schleife beim Herausnehmen des Kerns entlang der Länge des Kerns (4) verschoben wird.

## Claims

1. A joint system for an automotive glazing unit (1), in particular a windshield, said system comprising:
- a profiled bead (3) comprising a hollow part (31) that is elongate and opened toward the top, said profiled bead (3) exhibiting in cross section a left neck part (32) and a right neck part (33),
- a core (4) comprising a pin (41) placed inside said hollow part (31), said core being a temporary elongate element that is removed after the glazing unit has been installed in the opening that it must close of a vehicle, during manufacture of the vehicle and before the vehicle is completely finished, and
- a gripping means (5) allowing said pin (41) to be removed from said hollow part (31),
**characterized in that,** seen in cross section, said gripping means (5) forms a flexible loop such that when it is not under stress it has a cylindrical tube shape, and comprises on the one hand a base (41) located between said pin (51) and said hollow part portion (31) and on the other hand a ring (52) placed above said core (4), so that the pin being able to be removed from the hollow part without damaging it in order for the subsequent clip-fastening of this plastic element to proceed correctly.

2. The system as claimed in claim 1, **characterized in that** said loop without the core inside has an inside diameter d comprised between 20 mm and 50 mm and preferably comprised between 30 mm and 40 mm.

3. The system as claimed in claim 1 or 2, **characterized in that** the loop has a width w comprised between 3 mm and 30 mm and/or the part of the ring (52) located above the glazed element has a height h comprised between 3 and 30 mm.

4. The system as claimed in any one of claims 1 to 3, **characterized in that** said gripping means (5) is a wire that is closed on itself, preferably without superposition of material, said wire preferably having a diameter comprised between 0.8 mm and 2 mm.

5. The system as claimed in any one of claims 1 to 3, **characterized in that** said gripping means (5) is a strip that is closed on itself, preferably without superposition of material, said strip having a length L comprised between 3 mm and 10 mm.

6. The system as claimed in any one of claims 1 to 5, **characterized in that** the loop of the ring (52) extends from the left neck part (31) to the right neck part (32).

7. The system as claimed in any one of claims 1 to 6, **characterized in that** said gripping means (5) is unique or two gripping means (5) are provided, preferably each one near each longitudinal end of said core (4).

8. An automotive glazing unit (1), in particular a windshield, said glazing unit (1) comprising a glazed element (2) and a joint system as claimed in any one of claims 1 to 7.

9. A method for fitting a glazing unit (1) comprising a joint system as claimed in any one of claims 1 to 7 into a body opening, in which said gripping means (5) in the form of a loop is slid along the core (4) during removal of the core.
